# EUROPÄISCHE PATENTANMELDUNG

(11) **EP 0 555 708 A1**
(43) Veröffentlichungstag der Anmeldung: **18.08.1993**
(21) Anmeldenummer: 93101458.3
(22) Anmeldetag: 30.01.1993
(51) Int. Cl.: H04B 10/14

(54) **Verfahren zur Übertragung optischer Signale**

(30) Priorität: 10.02.1992 DE 4203842
(71) Anmelder: KABEL RHEYDT Aktiengesellschaft, D-41179 Mönchengladbach (DE)
(72) Erfinder: Seidenberg, Jürgen, Dr.-Ing., W-5100 Aachen (DE)
(74) Vertreter: Döring, Roger, Dipl.-Ing.

(57) **Zusammenfassung**

Es wird ein Verfahren zur Übertragung von optischen Signalen über einen Lichtwellenleiter unter Einsatz von Halbleiterlasern mit geringfügig quadratischer Kennlinie angegeben, denen ein Vorstrom zur Herstellung des Licht aussendenden Zustands und ein Signalstrom zugeführt werden. Die Übertragungsstrecke wird durch mindestens einen in den Lichtwellenleiter eingeschalteten Verstärker in mindestens zwei Teilstrecken unterteilt. Am Anfang der Übertragungsstrecke und in jedem Verstärker ist ein Halbleiterlaser eingesetzt. In Übertragungsrichtung gesehen werden jeweils für zwei aneinander anschließende Teilstrecken des Lichtwellenleiters (L) Verzerrungen der Signale, welche durch die Halbleiterlaser hervorgerufen werden, durch gegensinnig wirkende Maßnahmen kompensiert.

## Beschreibung

Die Erfindung bezieht sich auf ein Verfahren zur Übertragung von optischen Signalen über einen Lichtwellenleiter unter Einsatz von Halbleiterlasern mit geringfügig quadratischer Kennlinie, denen ein Vorstrom zur Herstellung des Licht aussendenden Zustands und ein Signalstrom zugeführt werden, bei welchem die Übertragungsstrecke durch mindestens einen in den Lichtwellenleiter eingeschalteten Verstärker in mindestens zwei Teilstrecken unterteilt wird und bei welchem am Anfang der Übertragungsstrecke und in jedem Verstärker ein Halbleiterlaser eingesetzt ist.

Ein derartiges Verfahren wird bei allen optischen Übertragungsverfahren zur Übertragung nachrichtentechnischer Signale verwendet. Ein spezielles Einsatzgebiet ist beispielsweise der Breitbandkabelbereich, in dem Teilnehmer beispielsweise mit Telefon, Telefax, Bildschirmtext und Fernsehen angeschlossen werden. Die Reichweite der über Lichtwellenleiter zu übertragenden Signale ist größer als die mit metallischen Leitern mögliche Reichweite. Trotzdem muß in den meisten Fällen mindestens an einer Stelle ein Verstärker in die Übertragungsstrecke eingeschaltet werden. Die sowohl am Anfang der Übertragungsstrecke als auch in den Verstärkern eingesetzten Halbleiterlaser haben geringfügig quadratische und damit gekrümmte Kennlinien. Das führt zu nichtlinearen Verzerrungen der Signale, insbesondere zu Verzerrungen zweiter Ordnung. Es kann daher geschehen, daß die zu übertragenden Signale bereits nach zwei Teilstrecken so verzerrt sind, das kein einwandfreier Empfang mehr möglich ist.

Der Erfindung liegt die Aufgabe zugrunde, das eingangs geschilderte Verfahren so zu gestalten, daß am Ende der Übertragungsstrecke stets ein für die Weiterverarbeitung geeignetes Signal zur Verfügung steht.

Diese Aufgabe wird gemäß der Erfindung dadurch gelöst, daß in Übertragungsrichtung gesehen jeweils für zwei aneinander anschließende Teilstrecken des Lichtwellenleiters Verzerrungen der Signale, welche durch die Halbleiterlaser hervorgerufen werden, durch gegensinnig wirkende Maßnahmen kompensiert werden.

Mit diesem Verfahren werden durch gezielten Eingriff die von den eingesetzten Halbleiterlasern hervorgerufenen Verzerrungen der Signale kompensiert, und zwar durch Maßnahmen, die zu den die Verzerrungen hervorrufenden Eigenschaften der Halbleiterlaser entgegengesetzt wirken. Das wird in bevorzugter Ausführungsform dadurch erreicht, daß beispielsweise bei zwei aneinander anschließenden Teilstrecken des Lichtwellenleiters zwei Halbleiterlaser mit unterschiedlichem Verlauf ihrer Kennlinie eingesetzt werden. Die Kennlinie des einen Halbleiterlasers ist in der einen Richtung gekrümmt, während die Kennlinie des anderen in der entgegengesetzten Richtung gekrümmt ist.

Es ist aber auch möglich, Halbleiterlaser mit in gleicher Richtung gekrümmter Kennlinie einzusetzten, wenn die Signale vor jedem zweiten Halbleiterlaser invertiert werden.

Das Verfahren nach der Erfindung wird anhand der Zeichnungen als Ausführungsbeispiel erläutert.

Es zeigen:
Fig. 1 in schematischer Darstellung eine Übertragungsstrecke für optische Signale.
Fig. 2 und 3 unterschiedliche Kennlinien von Halbleiterlasern, die für das Verfahren nach der Erfindung eingesetzt werden.

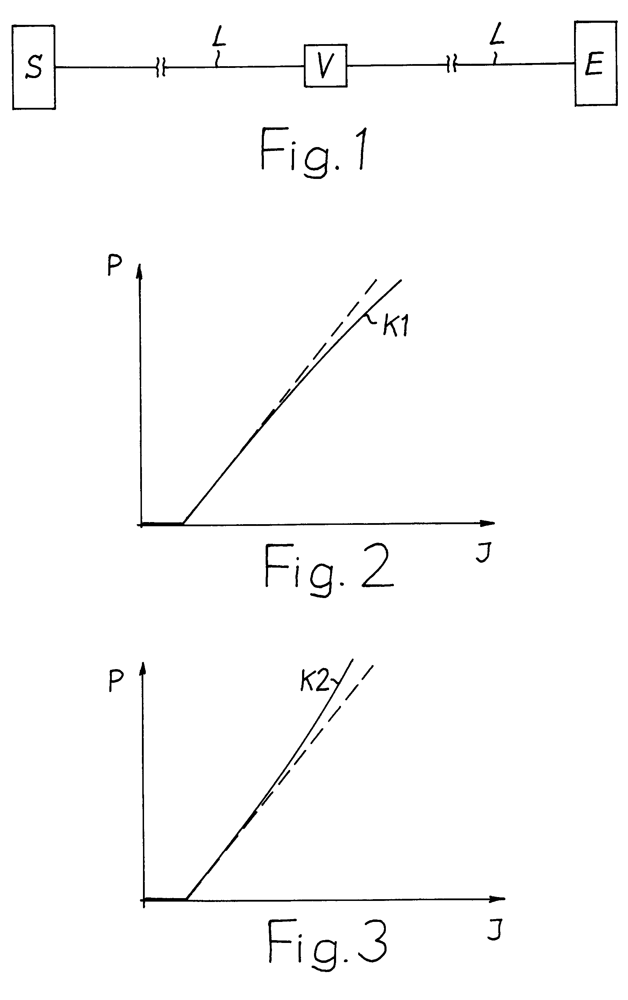

Die in Fig. 1 schematisch dargestellte Übertragungsstrecke optischer Signale besteht aus einem Sender S und einem Empfänger E, zwischen denen ein Lichtwellenleiter L als Übertragungsmedium angeordnet ist. Die Übertragungsstrecke ist durch einen Verstärker V in zwei Teilstrecken unterteilt.

Sowohl im Sender S als auch im Verstärker V sind Halbleiterlaser - im folgenden kurz "Laser" genannt - eingesetzt, welche die optischen Signale aussenden. Die Halbleiterlaser haben geringfügig quadratische, also gekrümmt verlaufende Kennlinien. Die Kennlinien können gemäß Fig. 2 und 3 mit unterschiedlich gerichteter Krümmung gegenüber einer gestrichelt eingezeichneten linearen Kennlinie verlaufen. Wenn die Kennlinien, die den Verlauf der Leistung P über dem Strom I (Vorstrom) wiedergeben, nicht bereits vom Hersteller mitgeliefert werden, dann können sie leicht im Labor ermittelt werden. Die Kennlinie K1 nach Fig. 2 gilt beispielsweise für einen sogenannten "sublinearen" Laser, während die Kennlinie K2 nach Fig. 3 zu einem sogenannten "superlinearen" Laser gehört. Es kann dabei davon ausgegangen werden, daß die Kennlinien von Lasern des gleichen Typs jeweils identisch bzw. reproduzierbar sind.

Zur Durchführung des Verfahrens wird beispielsweise im Sender S ein Laser mit der Kennlinie K1 eingesetzt, während im Verstärker V ein Laser mit der Kennlinie K2 verwendet wird. Die durch den Laser des Senders bedingten Verzerrungen der Signale werden durch den Laser des Verstärkers V so weit kompensiert, daß beim Empfänger E einwandfrei weiterzuverarbeitende Signale ankommen. Im Idealfall können die Verzerrungen der Signale durch die beiden Laser mit unterschiedlichen Kennlinien K1 und K2 vollständig kompensiert werden.

Zur Kompensation der durch den Laser im Sender S hervorgerufenen Verzerrungen der Signale kann auch der Einsatz einer inversen Übertragungsfunktion angewendet werden. Dazu werden sowohl im Sender S als auch im Verstärker V Laser mit identisch gekrümmter Kennlinie eingesetzt. Die Laser haben also alle entweder die Kennlinie K1 oder die Kennlinie K2. Es werden dann beispielsweise im Verstärker V die empfangenen Signale vor ihrer Weitergabe an den dortigen Laser invertiert. Hierfür kann beispielsweise ein invertierender Verstärker mit einer Verstärkung von "1" eingesetzt werden.

Das Verfahren ist auch dann anwendbar, wenn mehr als ein Verstärker eingesetzt werden muß. Es werden dann entweder abwechselnd für die aneinander anschließenden Teilstrecken des Lichtwellenleiters L Laser mit unterschiedlichen Kennlinien K1 oder K2 eingesetzt oder die empfangenen Signale werden jeweils vor dem zweiten Laser invertiert.

## Patentansprüche

1. Verfahren zur Übertragung von optischen Signalen über einen Lichtwellenleiter unter Einsatz von Halbleiterlasern mit geringfügig quadratischer Kennlinie, denen ein Vorstrom zur Herstellung des Licht aussendenden Zustands und ein Signalstrom zugeführt werden, bei welchem die Übertragungsstrecke durch mindestens einen in den Lichtwellenleiter eingeschalteten Verstärker in mindestens zwei Teilstrecken unterteilt wird und bei welchem am Anfang der Übertragungsstrecke und in jedem Verstärker ein Halbleiterlaser eingesetzt ist, dadurch gekennzeichnet, daß in Übertragungsrichtung gesehen jeweils für zwei aneinander anschließende Teilstrecken des Lichtwellenleiters (L) Verzerrungen der Signale, welche durch die Halbleiterlaser hervorgerufen werden, durch gegensinnig wirkende Maßnahmen kompensiert werden.

2. Verfahren nach Anspruch 1, dadurch gekennzeichnet, daß abwechselnd Halbleiterlaser eingesetzt werden, deren parabolisch gekrümmte Kennlinien (K1, K2) in unterschiedlichen Richtungen gekrümmt sind.

3. Verfahren nach Anspruch 1, dadurch gekennzeichnet, daß nur Halbleiterlaser mit identisch gekrümmter Kennlinie (K1, K2) eingesetzt werden und daß das empfangene Signal vor jedem zweiten Halbleiterlaser invertiert wird.
